# EUROPÄISCHE PATENTSCHRIFT

(11) **EP 2 280 201 B1**
(45) Veröffentlichungstag und Bekanntmachung des Hinweises auf die Patenterteilung: **19.12.2012**
(21) Anmeldenummer: 10007612.4
(22) Anmeldetag: 22.07.2010
(51) Int. Cl.: F16J 15/32

(54) **Dichtung**
Seal
Joint

(30) Priorität: 31.07.2009 DE 102009035802
(43) Veröffentlichungstag der Anmeldung: 02.02.2011
(73) Patentinhaber: Carl Freudenberg KG, 69469 Weinheim (DE)
(72) Erfinder: Lutaud, Dominique, 52360 Orbigny au Mont (FR)

(56) Entgegenhaltungen:
- WO-A1-2007/126432
- WO-A1-2008/009317
- DE-A1-102005 025 253
- DE-U1- 8 613 737
- DE-U1-202004 004 317

## Beschreibung

### Technisches Gebiet

Die Erfindung betrifft eine Dichtung mit zumindest einer Dichtlippe.

### Stand der Technik

Dichtungen, die wenigstens eine Dichtlippe aufweisen, die dichtend an einem Maschinenelement, beispielsweise einer Welle anliegt sind allgemein bekannt. In der WO 2008009317 ist eine Dichtung mit einer dynamischen Dichtlippe offenbart. Die Dichtlippe bestehen meist aus einem elastomeren Werkstoff oder aus PTFE. Die Dichtlippe ist meist stoffschlüssig an einem Tragkörper befestigt, der meist aus einem metallischen Werkstoff besteht. Zur Verbesserung der Hafteigenschaften, insbesondere von Dichtlippen aus PTFE wird die Oberfläche der Dichtlippe aktiviert, so dass die Dichtlippe sicher an dem Tragkörper haftet. Allerdings wird die Oberflächenbehandlung aus Effizienzgründen vollflächig ausgeführt, so dass auch die dichtungswirksamen an dem Maschinenelement anliegenden Bereiche der Dichtlippe ebenfalls aktiviert sind. Durch diese Aktivierung steigt die Benetzbarkeit der Dichtrippe gegenüber polaren und unpolaren Medien stark an. Aus dieser gestiegenen Benetzbarkeit können Mikroleckagen resultieren, wodurch abzudichtendes Schmiermittel nach außen treten kann. Des Weiteren können Flüssigkeiten in das abzudichtende Gehäuse eindringen.

### Darstellung der Erfindung

Der Erfindung liegt die Aufgabe zugrunde, die Dichtung so weiter zu entwickeln, dass die Gefahr der Mikroleckage reduziert ist.

Diese Aufgabe wird mit den Merkmalen von Anspruch 1 gelöst. Auf vorteilhafte Ausgestaltungen nehmen die Unteransprüche Bezug.

Zur Lösung der Aufgabe ist die Dichtlippe zur Herabsetzung der Benetzbarkeit gegenüber polaren und/oder unpolaren Medien zumindest partiell mit einer Beschichtung versehen. Diese Beschichtung ist erfindungsgemäß insbesondere bei solchen Dichtlippe vorteilhaft, die zur Verbesserung der Klebeeigenschaften im Anschlussbereich an den Tragring an der Oberfläche durch Chemikalien oder Bestrahlung behandelt wurden. Bei diesen Dichtlippen ist die Benetzbarkeit durch die Oberflächenbehandlung erhöht, so dass eine Benetzung und Filmbitdung durch Schmiermittel oder andere Flüssigkeiten erfolgen kann. Durch die Benetzung kann das Schmiermittel an der Oberfläche der Dichtlippe entlang kriechen und so Mikroleckagen hervorrufen. Eine zumindest lokale Beschichtung senkt die Benetzbarkeit gegenüber dem Schmiermittel, so dass sich kein geschlossener Film bilden kann, der die Mikroleckage verursacht.

Die Beschichtung kann im Funktionsbereich der Dichtlippe aufgebracht sein. Funktionsbereich ist insbesondere der Bereich, der mit dem abzudichtenden Maschinenelement in Kontakt ist und den Abschluss des dynamischen Dichtbereichs bildet. Der Bereich vor dem Funktionsbereich ist häufig mit einer hydrodynamischen Struktur in Form einer Oberflächenprofilierung versehen, durch die das abzudichtende Medium in den abzudichtenden Raum zurück gefördert wird. In diesem Bereich ist eine Filmbildung erwünscht, da eine Filmbildung den Fördereffekt verstärkt. Der Funktionsbereich schließt sich an den Bereich mit der Oberflächenprofilierung in Richtung der Umgebung an. Das bedeutet, dass der Funktionsbereich bei in Richtung der Umgebung vorgewölbten Dichtlippen durch das freie Ende der Dichtlippe und bei in Richtung des abzudichtenden Raums vorgewölbten Dichtlippen durch den Anschlussbereich der Dichtlippe an den Tragkörper gebildet ist. In diesem Bereich ist eine Filmbildung unerwünscht, da die Filmbildung in diesem Bereich eine Tröpfchenbildung unterstützt, wobei die Tröpfchen in Richtung der Umgebung von der Welle abgeschleudert werden und so die Mikroleckage unterstützen. Wird die Benetzbarkeit in dem Funktionsbereich herabgesetzt, kann sich zum einen kein geschlossener Film bilden und zum anderen können sich keine größeren Tröpfchen bilden, die von der Welle abgeschleudert werden. Es ist also erfindungsgemäß auch denkbar, den Bereich der hydrodynamischen Struktur so zu behandeln, dass die Benetzbarkeit erhöht ist und den anschließenden Funktionsbereich so zu behandeln, dass die Benetzbarkeit herabgesetzt ist.

Die Beschichtung an dem freien Ende der Dichtlippe aufgebracht sein. Dies ist vorzugsweise bei den Dichtlippen der Fall, deren freies Ende in Richtung der Umgebung vorgewölbt ist. Das freie Ende bildet in diesem Fall den Funktionsbereich.

Das Material der Dichtlippe kann einen PTFE-Compound umfassen. PTFE ist ein sehr inertes Material und weist einen sehr geringen Reibungskoeffizienten auf. PTFE ist ein unpolares Material und weist dementsprechend ohne vorherige Behandlung eine sehr geringe Benetzbarkeit gegenüber polaren Medien wie Wasser auf. Der Kontaktwinkel bei reinem PTFE ist zwar gegenüber unpolaren Medien wie Schmierölen gering. Aufgrund der geringen Oberflächenenergie kann das Schmieröl jedoch nicht anhaften. Die geringe Oberflächenenergie ist auch nachteilig, wenn die Dichtlippe stoffschlüssig an einem Tragring befestigt werden soll, weil zwischen Klebstoff und PTFE keine ausreichende Haftung erzeugt wird. Aus diesem Grund wird die Oberfläche der Dichtlippe aktiviert, so dass die Haftneigung steigt. Damit geht jedoch auch ein Anstieg der Benetzbarkeit einher, der wiederum insbesondere in dem Funktionsbereich nachteilig ist. Durch eine Beschichtung wird diese Benetzbarkeit wieder herabgesetzt, so dass gegenüber polaren Medien wieder ein größerer Kontaktwinkel von über 90° entsteht. Darüber hinaus kann jedoch auch durch die Beschichtung der Kontaktwinkel gegenüber unpolaren Medien erhöht werden, so dass dieser ebenfalls größer 90° ist.

Das Material der Dichtlippe kann Glasfasern umfassen. Glasfasern erhöhen die Festigkeit der Dichtlippe. Insbesondere wenn diese aus einem PTFE-Compound gebildet ist, wird auch die Kriechneigung reduziert. Da die Glasfasern an der Oberfläche heraustreten, kann die Beschichtung insbesondere an den Glasfasern anhaften und diese bedecken. Dies ist insbesondere dann vorteilhaft, wenn eine Haftung der Beschichtung an dem PTFE-Material nur schwierig herstellbar ist.

Die Beschichtung kann durch eine Plasmabehandlung erzeugt sein, Eine Plasmabehandlung ermöglicht durch eine gezielte Materialabscheidung den Aufbau einer Schicht mit einer sehr geringen Schichtdicke. Die durch Plasmabehandlung erzeugte Beschichtung kann so ausgebildet sein, dass die Benetzbarkeit gegenüber polaren und/oder unpolaren Medien gering ist.

Die Beschichtung kann ein perfluoriertes Tensid oder ein Fluorpolymer und/oder Alkoxysilan enthalten. Perfluorierte Tenside weisen lipophobe und hydrophobe Eigenschaften auf, so dass gleichzeitig die Benetzbarkeit gegenüber Wasser und Schmiermittel herabgesetzt ist. Fluorpolymere sind Stoffe ähnlich dem PTFE und weisen eine geringe Benetzbarkeit gegenüber polaren Medien sowie eine geringe Oberflächenenergie auf. Alkoxypolymere weisen ausgeprägtes antiadhäsives Verhalten auf und setzen so die Haftneigung der Dichtlippe gegenüber abzudichtenden Medien herab.

### Kurzbeschreibung der Zeichnung

Einige Ausführungsbeispiele einer Dichtung werden nachfolgend anhand der Figuren näher erläutert. Diese zeigen, jeweils schematisch:
- Fig. 1: eine Dichtung mit einer Dichtlippe aus PTFE;
- Fig. 2: eine Dichtung mit einer Dicht- und einer Staublippe aus PTFE;
- Fig. 3: eine Dichtung bestehend aus Tragring und PTFE-Dichtscheibe;
- Fig. 4: eine Dichtung mit einer in Richtung der Umgebung vorgewölbten Dichtlippe;
- Fig. 5: eine Dichtung mit einer in Richtung des abzudichtenden Raums vorgewölbten Dichtlippe;
- Fig. 6: das Benetzungsverhalten von polaren und unpolaren Flüssigkeiten auf der Beschichtung;
- Fig. 7: einen Gehäuseverschlussdeckel mit einer Beschichtung auf der statischen Dichtung;
- Fig. 8: den Gehäuseverschlussdeckel nach Figur 7 mit einer Beschichtung auf der Oberfläche des Flansches, wobei der Flansch mit der Beschichtung die statische Dichtung bildet;
- Fig. 9: den Gehäuseverschlussdeckel nach Figur 7 mit einer Beschichtung auf der Oberfläche des Dichtungsmaterials, wobei das Dichtungsmaterial mit der Beschichtung die statische Dichtung bildet.

### Ausführung der Erfindung

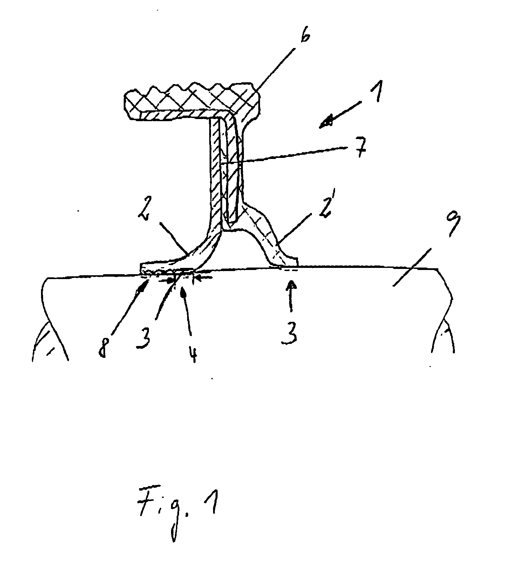

Figur 1 zeigt eine Dichtung 1, bei der zwei Dichtlippen 2, 2' an einem Tragring 6 befestigt sind. Dabei besteht eine Dichtlippe 2' aus elastomerem Werkstoff und ist direkt haftend an dem Tragring 6 befestigt. Dabei bildet das Material der Dichtlippe 2' gleichzeitig die Bindefläche 7 für die Dichtlippe 2, die in dieser Ausführung aus einem PTFE-Compound gebildet ist, welches zur Stabilisierung Glasfasern als Füllstoff beinhaltet. Beide Dichtlippen 2, 2' sind mit einer Beschichtung 3 versehen, durch die sich die Benetzbarkeit gegenüber polaren und unpolaren Medien herabsetzt. Dabei ist die Dichtlippe 2 lediglich partiell mit der Beschichtung 3 versehen, nämlich lediglich in einem Funktionsbereich 4, der sich in Richtung der Umgebung an den dynamischen Dichtbereich 8 der Dichtlippe 2, der mit einer Förderstruktur versehen ist, anschließt Die Beschichtung 3 ist eine Lösung, die Fluorpolymer oder perfluorierte Tenside und Alkoxysilane enthält. Diese Lösung wird beispielsweise lokal auf die Dichtlippe 2.2' aufgespritzt und härtet dort aus. In anderen Ausgestaltungen ist auch denkbar, eine Beschichtung 3 durch eine Materialabscheidung im Wege einer Plasmabehandlung zu erzeugen.

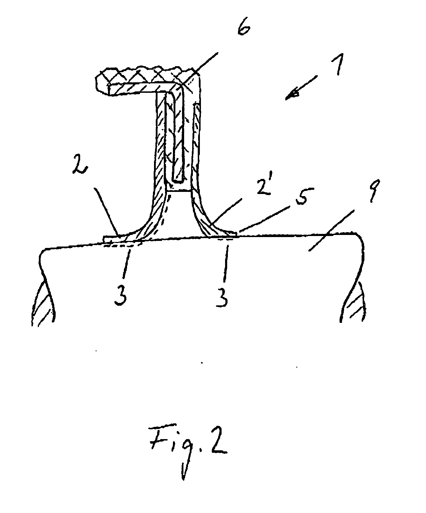

Figur 2 zeigt eine Dichtung 1 gemäß Figur 1, wobei die Dichtlippe 2' in dieser Ausführung ebenfalls aus einem PTFE-Compound gebildet ist. Die Dichtlippe 2 wurde auf der dem Maschinenelement 9 zugewandten Seite vollflächig mit einer Beschichtung 3 versehen.

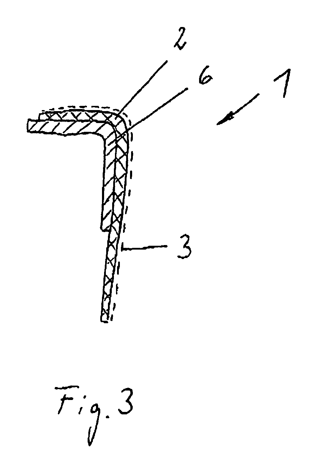

Figur 3 zeigt eine Dichtung 1 die lediglich einen Tragring 6 umfasst, an dem einer Seite eine Dichtlippe 2 in Form einer Dichtscheibe stoffschlüssig befestigt ist. Die Dichtlippe 2 besteht aus einem PTFE-Compound und beinhaltet als Füllstoff Glasfasern. Die freie Seite der Dichtlippe 2 ist vollflächig mit einer wie zuvor beschriebenen Beschichtung 3 versehen, wobei die Beschichtung 3 besonders gut an den Glasfasern anhaftet. Dabei ist die Dichtung 1 so ausgelegt, dass die mit der Beschichtung 3 versehenen Seite nach der Montage dem abzudichtenden Raum zugewandt ist, so dass ausschließlich beschichtete Komponenten der Dichtung 1 in Kontakt mit dem abzudichtenden Medium gelangen und so die Dichtung 1 besser gegen aggressive Medien geschützt ist.

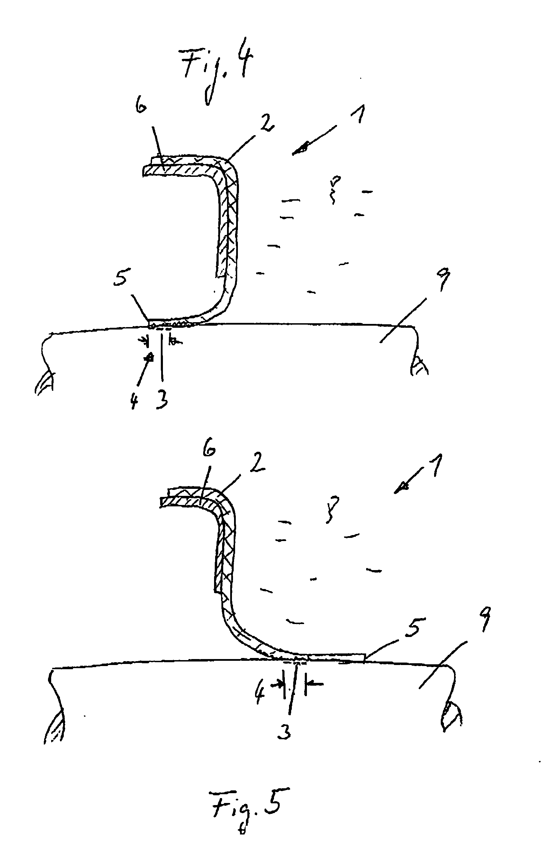

Figur 4 zeigt eine Dichtung 1 gemäß Figur 3 auf ein Maschinenelement 9 montiert, wobei das freie Ende 5 der Dichtung in Richtung der Umgebung ragt. In dieser Ausführung ist lediglich eine partielle Beschichtung 3 der Dichtlippe in einem Funktionsbereich 4 vorgesehen, der hier dem freien Ende 5 zugeordnet ist.
Figur 5 zeigt eine Dichtung 1 gemäß Figur 3 auf ein Maschinenelement 9 montiert, wobei das freie Ende 5 der Dichtung in Richtung des abzudichtenden Mediums ragt, In dieser Ausführung ist lediglich eine partielle Beschichtung 3 der Dichtlippe in einem Funktionsbereich 4 vorgesehen, der hier dem Anschlussbereich der Dichtlippe 2 an den Tragring 6 zugeordnet ist.
   die Beschichtung 3 im Funktionsbereich 4 der Dichtlippe 2 aufgebracht ist.

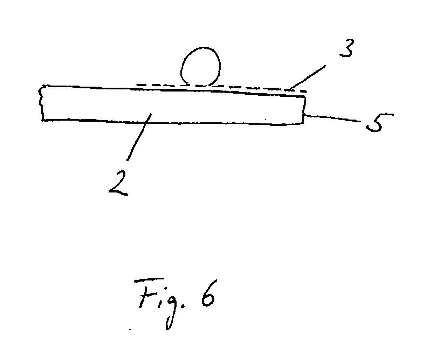

Figur 6 zeigt das Benetzungsverhalten einer mit einer Beschichtung 3 versehenen Dichtlippe 2. Gegenüber polaren Medien wie Wasser und gegenüber unpolaren Medien wie Schmieröl ergibt sich jeweils ein Kontaktwinkel der größer als 90° ist.

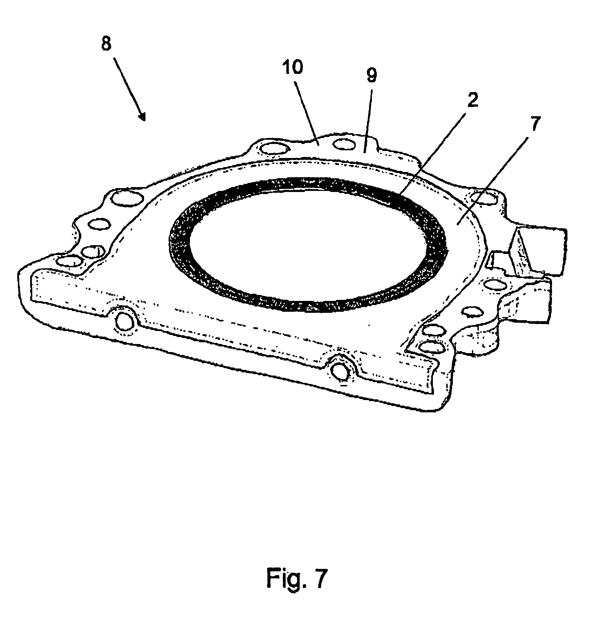

Figur 7 bezieht sich auf eine nicht erfindungsgemäße Ausgestaltung und zeigt einen Gehäuseverschlussdeckel 8, umfassend eine Durchgangsöffnung für eine abzudichtende Welle. Der Gehäuseverschlussdeckel 8 umfasst einen Versteifungsflansch 9, welcher mit einem Dichtungsmaterial versehen ist, wobei aus dem Dichtungsmaterial eine dynamische Dichtlippe 2 und eine statische Dichtung 7 ausgebildet sind. Der Versteifungsflansch 9 besteht aus einem Kunststoff und das Dichtungsmaterial ist ein PTFE-Compound. Die Oberfläche 10 des Versteifungsflansches 9 ist mit mindestens einer konzentrisch die Durchgangsöffnung umgebende Erhebung 11 ausgerüstet, wobei die Erhebung 11 als Rippe geformt sein kann. In dem Bereich der Erhebung steigt die lokale Anpressung des Gehäuseverschlussdeckels 8 und verbessert so die Dichtwirkung der mit der Beschichtung 3 behandelten Oberfläche.

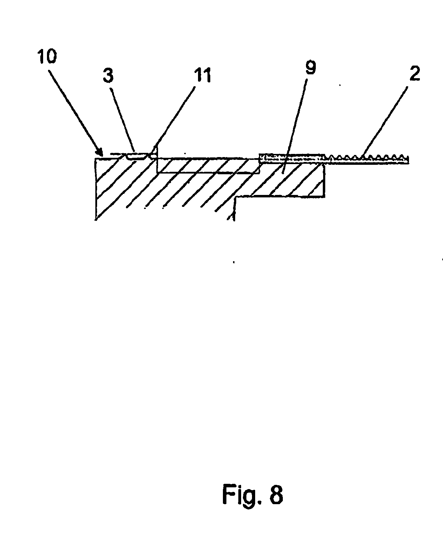

Figur 8 zeigt einen Gehäuseverschlussdeckel 8 gemäß Figur 7. In dieser nicht erfindungsgemäßen Ausgestaltung ist die Beschichtung 3 direkt auf der Kunststoff-Oberfläche des Versteifungsflansches 9 angeordnet. Der beschichtete Bereich der Oberfläche 10 des Versteifungsflansches 9 ist mit zwei konzentrischen Erhebungen ausgerüstet. Dieser Bereich bildet die statische Dichtung 7.

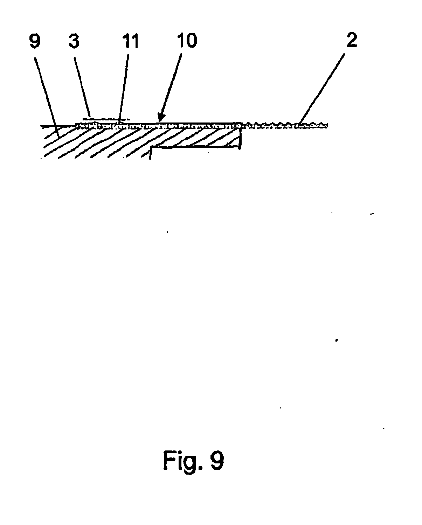

Figur 9 zeigt einen Gehäuseverschlussdeckel 8 gemäß Figur 7. In dieser nicht erfindungsgemäßen Ausgestaltung ist die Beschichtung 3 auf der Oberfläche 10 des Dichtungsmaterials angeordnet. Der beschichtete Bereich der Oberfläche 10 des Dichtungsmaterials ist mit zwei konzentrischen Erhebungen ausgerüstet und bildet die statische Dichtung 7. Die Beschichtung der des Dichtungsmaterials erlaubt die Verwendung desselben Dichtungsmaterials wie es für die dynamische Dichtung 2 verwendet wird.

## Patentansprüche

1. Dichtung (1) mit zumindest einer dynamischen Dichtlippe (2), wobei die Dichtlippe (2) zur Herabsetzung der Benetzbarkeit gegenüber polaren und/oder unpolaren Medien und zur Reduzierung der Gefahr der Mikroleckage zumindest partiell mit einer Beschichtung (3) versehen ist, wobei die Beschichtung (3) im Funktionsbereich (4) der Dichtlippe (2) aufgebracht ist, wobei der Funktionsbereich (4) dem dynamischen Dichtbereich der Dichtlippe (2) zugeordnet ist.

## Claims

1. Seal (1) with at least one dynamic sealing lip (2), the sealing lip (2) being provided at least partially with a coating (3) for lowering wettability with respect to polar and/or non-polar media and for reducing the risk of microleakage, the coating (3) being applied in the functional region (4) to the sealing lip (2), the functional region (4) being assigned to the dynamic sealing region of the sealing lip (2).

## Revendications

1. Joint d'étanchéité (1) comprenant au moins une lèvre d'étanchéité dynamique (2), la lèvre d'étanchéité (2) étant pourvue au moins en partie d'un revêtement (3) pour abaisser la mouillabilité vis-à-vis des milieux polaires et/ou non polaires et pour réduire le risque de microfuites, le revêtement (3) étant appliqué dans la zone fonctionnelle (4) de la lèvre d'étanchéité (2), la zone fonctionnelle (4) étant associée à la zone d'étanchéité dynamique de la lèvre d'étanchéité (2).
